# EUROPÄISCHE PATENTSCHRIFT

(11) **EP 3 099 208 B1**
(45) Veröffentlichungstag und Bekanntmachung des Hinweises auf die Patenterteilung: **02.12.2020**
(21) Anmeldenummer: 14825263.8
(22) Anmeldetag: 04.12.2014
(51) Int. Cl.: A47J 31/40, A47J 31/44

(54) **AROMAMODUL SOWIE VERFAHREN ZUM BETRIEB EINES SOLCHEN AROMAMODULS**
FLAVOR MODULE AND METHOD FOR OPERATING SUCH A FLAVOR MODULE
MODULE D'ARÔME ET PROCÉDÉ POUR FAIRE FONCTIONNER UN TEL MODULE D'ARÔME

(30) Priorität: 31.01.2014 CH 1282014
(43) Veröffentlichungstag der Anmeldung: 07.12.2016
(73) Patentinhaber: Schaerer AG, 4528 Zuchwil (CH)
(72) Erfinder: KISSLING, Franco, 4500 Solothurn (CH); WERTHMÜLLER, Fabian, 4513 Langendorf (CH)
(74) Vertreter: IPrime Rentsch Kaelin AG
(86) Internationale Anmeldenummer: PCT/EP2014/003239
(87) Internationale Veröffentlichungsnummer: WO 2015/113580

(56) Entgegenhaltungen:
- EP-A2- 2 030 538
- WO-A1-2013/124188
- WO-A1-2013/131722
- WO-A2-2009/140349
- CH-A1- 709 187
- US-A1- 2007 202 234

## Beschreibung

### TECHNISCHES GEBIET

Die vorliegende Erfindung bezieht sich auf das Gebiet der Zubereitung von Getränken. Sie betrifft ein Aromamodul gemäss dem Oberbegriff des Anspruchs 1. Sie betrifft weiterhin ein Verfahren zum Betrieb eines solchen Aromamoduls.

### STAND DER TECHNIK

Kaffeemaschinen sind in vielfältiger Weise bekannt. Insbesondere bekannt sind automatische Kaffeemaschinen, in welchen für jeden zu beziehenden Kaffee aus Kaffeebohnen frisch gemahlenes Kaffeepulver hergestellt wird und das Kaffeepulver einer Brühkammer zugeführt wird, in welcher der zu beziehende Kaffee unter optimalen Bedingungen gebrüht werden kann. Derartige Kaffeemaschinen können auch mit Einrichtungen ergänzt sein, mit welchen dem bezogenen Kaffee in bekannter Weise Milch in verschiedener Konsistenz, insbesondere in Form von Milchschaum, zugeführt werden kann, wodurch mit derartigen Kaffeemaschinen neben normalen und Espresso-Kaffees auch Milchkaffee, Cappuccino und Kaffee Macchiato usw. hergestellt werden können.

Immer beliebter sind auch Kaffeegetränke, bei welchen den aus der Kaffeemaschine bezogenen Kaffees zusätzlich ein Aromastoff zugesetzt wird. Besonders geeignete Aromen sind hierbei beispielsweise Vanille, Amaretto, Haselnuss, Karamell, Zimt, Mandel oder Schokolade. Denkbar als Aromazusätze sind z.B. auch Schnäpse. Diese Aromastoffe werden den durch die Kaffeemaschine hergestellten Kaffees entweder von Hand beigefügt oder mittels dafür vorgesehener Vorrichtungen automatisch und programmierbar zugesetzt. Die Vorrichtungen können dabei in die Kaffeemaschine integriert oder zustellbar ausgebildet sein.

Die Druckschrift EP 2 011 422 A1 der Anmelderin offenbart eine Kaffeemaschine zur Ausgabe von gebrühtem Kaffee mit einem Kaffeeausguss, unter welchen ein Gefäss hinstellbar ist, so dass der durch den Kaffeeausguss austretende gebrühte Kaffee in das Gefäss gelangt. Es ist eine Steuereinheit vorgesehen, mit welcher der Betrieb der Kaffeemaschine und der Bezug von Kaffee steuerbar sind. Der Kaffeemaschine ist mindestens ein Zuführmittel zur Ausgabe mindestens eines Aromastoffes zugeordnet, welches jeweils mit einem Behälter für die Aufnahme eines Aromastoffes sowie Förder- und Dosiermitteln zur Förderung einer dosierten Menge des Aromastoffes aus dem Behälter in eine Leitung ausgestattet ist. Die Leitung ist mit einem Ausguss versehen, der so angeordnet ist, dass der geförderte Aromastoff in das unter dem Kaffeeausguss stehende Gefäss gelangt. Der Behälter ist als wieder füllbar beschrieben. Über die Art und Weise des Nachfüllens werden keiner Angaben gemacht.

Die Druckschrift WO 2009004089 A1 der Anmelderin offenbart eine Vorrichtung zur Ausgabe von auf Milch basierenden Getränken, umfassend einen Milchbehälter, eine Pumpe zur Förderund der Milch vom Milchbehälter zu einem Milchauslass, Zuführmittel zum Zuführen von mindestens einem Aromastoff in die Milch und Mittel zum Mischen des mindestens einen Aromastoffes mit der Milch. In einem Gehäuse ist ein kühlbarer Schrank angeordnet, in welchen der Milchbehälter einsetzbar ist, wobei die Milch im Milchbehälter über eine Schlauchleitung, in welcher die Pumpe zur Förderung der Milch angeordnet ist, vom Milchbehälter in einer dosierbaren Menge in eine Mixvorrichtung überführbar ist, wobei in die Mixvorrichtung durch die Zuführmittel mindestens ein Aromastoff dosiert zuführbar und mit der Milch vermischbar ist und wobei das so erhaltene Mischgetränk über einen Auslass in ein unter diesem Auslass stehendes Gefäss gelangt. Der Aromastoff kann dabei pulverförmig und/oder flüssig sein.

Die Druckschrift EP 2 412 280 A1 beschreibt ein Verfahren zur Ausgabe eines Getränks, das aus seiner vorbestimmten Menge einer Basisflüssigkeit und einer vorbestimmten Menge eines Aromastoffes besteht. Beide Anteile werden zu gleicher Zeit aus entsprechenden Behältern zusammen angesaugt, komprimiert und in einen Sammelbehälter für das aromatisierte Getränk ausgestossen. Über das Auswechseln oder Nachfüllen leerer Behälter für die Aromastoffe wird nichts ausgesagt.

Die Druckschrift US 2002148858 A1 offenbart einen Verbinder für flüssigen Aromasirup für den Einsatz bei Heissgetränk-Geräten. Der Verbinder umfasst einen Hauptkörper, der eine Leitung bildet, die einen Einlass und einen Auslass verbindet, Mittel zum Einsetzen dieser Leitung am Auslass einer Getränkeausgabevorrichtung, und wenigstens einen Anschluss für die Versorgung mit einem flüssigen Aromastoff, der in Verbindung mit der Leitung in dem Hauptkörper ausgeformt ist, so dass Aromasirup, der in den Anschluss eingeführt wird, in die Leitung fliesst. Der Aromasirup ist in flexiblen Kissen untergebracht, die in herausziehbaren Schubladen angeordnet sind und mittels einer hydraulischen Steckverbindung unmittelbar am Kissen angeschlossen werden (Fig. 13-19). Wird ein leeres Kissen abgehängt, kann leicht aus der zugehörigen Leitung 134 Restsirup nach unten heraustropfen und das System verschmutzen, was aufwändige Reinigungsarbeiten zur Folge hat.

Die Druckschrift WO 2006058713 A1 beschreibt ein Verfahren zur Ausgabe eines aromatisierten Getränks, bei dem aus einem Basiskonzentrat durch Zugabe von Wasser zunächst ein Basisgetränk hergestellt und in einen Behälter ausgegeben wird, und dann aus einem Behälter ein Aromazusatz hinzugegeben und mit dem Basisgetränk vermischt wird. Über das Nachfüllen oder Auswechseln leerer Behälter ist nichts offenbart.

In der Druckschrift WO 2008015097 A2 wird eine modulare Ausgabeeinheit offenbart mit einer Trageinheit, an der eine Mehrzahl von Behältern mit Zusatzstoffen angeordnet ist, ebenso wie eine Mehrzahl von Pumpen, wobei die Pumpen funktionell mit den Behältern verbunden sind, um einen oder mehrere Zusätze aus den Behältern auszugeben, und wobei die Ausgabeeinheit so konstruiert und angeordnet ist, dass sie an eine Getränkeausgabemaschine angesetzt und operativ mit dieser verbunden werden kann. Auch hier sind die Zusatzstoffe vorzugsweise in flexiblen Kissen untergebracht, die mit einer Öffnung auf entsprechende Anschlüsse aufgesteckt werden, was beim Wechsel ebenfalls zu Verunreinigungen führt.

Die Druckschrift US 8,161,865 B2 schliesslich beschreibt eine modulare Geschmacksstoffausgabeeinheit für die Ausgabe einer Mehrzahl von Geschmacksstoffen an eine separate Lebensmittel- oder Getränkemaschine, wobei die Mehrzahl der Geschmacksstoffe einen Schokoladensirup und wenigstens einen Nichtschokoladensirup beinhaltet. Die Ausgabeeinheit umfasst eine Ausgabekoordinationseinheit, die mit einer Motorsteuereinheit verbunden ist, die wiederum mit einer Mehrzahl von Pumpmodulen in Verbindung steht, von denen wenigstens eines als Schokoladensirup-Pumpmodul und eines als Nichtschokoladensirup-Pumpmodul ausgebildet ist. Jedes Pumpmodul umfasst ein Pumpmodulboard, wenigstens eine Pumpe und wenigstens ein Geschmacksstoffreservoir. Jede Pumpe verbindet sein Geschmacksstoffreservoir mit seiner Auslassleitung. Das Schokoladensirup-Pumpmodul umfasst eine Taumelscheibenpumpe und das Nichtschokoladensirup-Pumpmodul umfasst eine Schlauchquetschpumpe. Alle Einheiten sind so programmiert, dass sie nach einem ausgewählten Rezept die jeweiligen Geschmacksstoffe zur separaten Lebensmittel- oder Getränkemaschine pumpen. Auch hier sind die Zusatzstoffe vorzugsweise in flexiblen Kissen untergebracht, die mit einer Öffnung nach unten auf entsprechende Anschlüsse aufgesteckt werden, was beim Wechsel ebenfalls zu Verunreinigungen führt.

Die bekannten Vorrichtungen zur Ausgabe von aromatisierenden Zusatzstoffen aus entsprechenden Behältern an einen Getränkeautomaten haben den Nachteil, dass sie bei einem Wechsel des Behälters durch Nachtropfen und dergleichen im täglichen Betrieb zu einer Verschmutzung der Vorrichtung führen, die aus hygienischen Gründen beseitigt werden muss und zu einem erhöhten Wartungs- und Pflegeaufwand führt.

### DARSTELLUNG DER ERFINDUNG

Es ist daher eine Aufgabe der Erfindung, ein Aromamodul zu schaffen, welches die genannten Nachteile der bekannten Aromamodule vermeidet und sich durch eine schnelle saubere Austauschbarkeit der Aromabehälter auszeichnet.

Es ist weiterhin eine Aufgabe der Erfindung, ein Verfahren zum Betrieb eines solchen Aromamoduls anzugeben.

Diese und andere Aufgaben werden durch die Merkmale der Ansprüche 1 und 15 gelöst.

Das erfindungsgemässe Aromamodul zur gesteuerten Ausgabe von aromatisierenden Getränkezusätzen, insbesondere im Zusammenwirken mit einem Kaffeeautomaten zur Aromatisierung von Kaffeegetränken, umfasst einen von einem Gehäuse umgebenen Raum zur Aufnahme eines oder mehrerer Aromabehälter. Es ist dadurch gekennzeichnet, dass jeder der Aromabehälter über einen Schlauch lösbar an das Aromamodul angeschlossen werden kann.

Die Druckschrift EP 2 030 538 A2 beschreibt eine Vorrichtung zum Bereiten von aromatisierten Heißgetränken, insbesondere Kaffee, Milch, Tee oder Mischgetränken, mit einer Einrichtung zum Zubereiten des Heißgetränks, die einen ersten Auslass aufweist, über den das Heißgetränk in ein Aufnahmegefäß, wie eine Tasse, einen Becher oder dergleichen, ausgebbar ist. Die Vorrichtung hat einen zweiten Auslass, der von dem ersten Auslass fluidtechnisch getrennt ist und der zum Ausgeben wenigstens eines Aromastoffs, insbesondere eines Sirups, in das Aufnahmegefäß mit wenigstens einem Aromastoffreservoir fluidtechnisch verbunden ist. Eine verbesserte Bedienfreundlichkeit im Hinblick auf Wartung und Reinigung wird erreicht durch einen separaten Auslass, der zum Ausgeben des Aromastoffs vorgesehen ist. Über das Auswechseln oder Nachfüllen leerer Behälter für die Aromastoffe wird nichts ausgesagt.

Eine Ausgestaltung zeichnet sich dadurch aus, jedem der Aromabehälter eine motorisch angetriebene, steuerbare Pumpe zur Förderung des Getränkezusatzes zugeordnet ist, die eingangsseitig über ein Schlauchsystem mit dem zugehörigen Aromabehälter hydraulisch verbindbar ist und ausgangsseitig mit einem Auslauf zur Ausgabe vorbestimmter Mengen des jeweiligen Getränkezusatzes verbindbar ist, dass die Aromabehälter jeweils eine oben liegende Öffnung aufweisen, durch welche der Inhalt des Aromabehälters entnehmbar ist, dass das Schlauchsystem einen Ansaugschlauch umfasst, welcher durch die Öffnung in den Aromabehälter so weit einführbar ist, dass er den Inhalt des Aromabehälters bis auf geringe Reste ansaugen kann, und dass der Ansaugschlauch mit dem pumpenseitigen Ende lösbar mit der zugehörigen Pumpe verbunden ist.

Durch den separaten, vom übrigen Schlauchsystem abtrennbaren Ansaugschlauch, der aus dem Behälter genügend weit herausragt, kann beim Auswechseln des Behälters die Schlauchverbindung zur Pumpe an einer geeigneten Stelle unterbrochen werden, ohne dass Aromastoffreste in das Innere des Moduls abtropfen. Nachdem der leere Behälter mit dem Ansaugschlauch aus dem Modul entnommen ist, können Ansaugschlauch und Behälter getrennt und der Ansaugschlauch separat gespült oder gereinigt werden. Der gespülte bzw. gereinigte Ansaugschlauch wird dann in den neuen Behälter eingeführt und nach dem Einsetzen des neuen Behälters schliesslich wieder mit dem übrigen Schlauchsystem verbunden.

Eine andere Ausgestaltung des Aromamoduls nach der Erfindung ist dadurch gekennzeichnet, dass der Ansaugschlauch jeweils durch einen Behältereinsatz geführt ist, der in die Öffnung im Aromabehälter einsetzbar ist.

Insbesondere verschliesst der Behältereinsatz die Öffnung im Aromabehälter.

Eine andere Ausgestaltung des Aromamoduls nach der Erfindung ist dadurch gekennzeichnet, dass zur lösbaren Verbindung des Ansaugschlauches mit der zugehörigen Pumpe eine hydraulische Steckverbindung vorgesehen ist.

Eine Weiterbildung dieser Ausgestaltung ist dadurch gekennzeichnet, dass die hydraulischen Steckverbindungen oberhalb des Raums zur Aufnahme der Aromabehälter angeordnet sind, dass die hydraulischen Steckverbindungen nebeneinander auf einer an der Frontseite des Gehäuses befestigten gemeinsamen Montageplatte, vorzugsweise durch die Montageplatte hindurchgehend, fest eingebaut sind, und dass die Pumpen im rückwärtigen Teil des Gehäuses, vorzugsweise nebeneinander und unterhalb der Steckverbindungen, angeordnet sind.

Insbesondere sind die hydraulischen Steckverbindungen so ausgelegt, dass die Ansaugschläuche jeweils mit einem am pumpenseitigen Ende angebrachten Stecker von vorn in die hydraulischen Steckverbindungen einsteckbar sind, und dass die hydraulischen Steckverbindungen jeweils über einen ersten Verbindungsschlauch mit dem Eingang der zugehörigen Pumpe verbunden sind.

Insbesondere sind die hydraulischen Steckverbindungen auf der Montageplatte mit ihrer Verbinderachse nach aussen hin schräg ansteigend montiert, und die jeweils am pumpenseitigen Ende der Ansaugschläuche angebrachten Stecker als Winkelstecker ausgebildet.

Insbesondere weisen die Winkelstecker lösbare Verriegelungsmittel, insbesondere in Form einer Drehverriegelung, auf.

Eine andere Ausgestaltung ist dadurch gekennzeichnet, dass zur Verbindung mit dem Auslauf von den Pumpen ausgangsseitig jeweils ein zweiter Verbindungsschlauch wegführt, und dass jedem der zweiten Verbindungsschläuche Mittel zur Überwachung des Füllzustandes zugeordnet sind.

Insbesondere sind die Mittel zur Überwachung des Füllzustandes als an den Schläuchen angeordnete kapazitive Sensoren ausgebildet.

Eine andere Ausgestaltung ist dadurch gekennzeichnet, dass der Raum für die Aufnahme der Aromabehälter durch eine, vorzugsweise seitlich angeschlagene, Tür zugänglich ist, und dass die hydraulischen Steckverbindungen durch eine, vorzugsweise nach oben aufklappbare, Klappe zugänglich sind.

Eine weitere Ausgestaltung ist dadurch gekennzeichnet, dass im Gehäuse eine, vorzugsweise nach vorne, herausziehbare Schublade angeordnet ist, welche zur Aufnahme der Aromabehälter vorgesehen ist.

Eine wieder andere Ausgestaltung ist dadurch gekennzeichnet, dass das Aromamodul zum seitlichen Anbau an einen Kaffeeautomaten vorgesehen ist, und dass in der dem Kaffeeautomaten zugewandten Seitenwand ein Durchbruch vorhanden ist, durch welchen elektrische Leitungen zwischen Kaffeeautomaten und Aromamodul und Aromaleitungen vom Aromamodul zum Kaffeeautomaten verlaufen.

Das erfindungsgemässe Verfahren zum Betrieb eines Aromamoduls nach der ersten Ausgestaltung der Erfindung ist dadurch gekennzeichnet, dass beim Auswechseln eine Aromabehälters in einem ersten Schritt der zugehörige Ansaugschlauch am pumpenseitigen Ende von der Verbindung mit der Pumpe gelöst wird, dass in einem zweiten Schritt der alte Aromabehälter mit seinem einsteckenden Ansaugschlauch aus dem Aromamodul entnommen wird, dass in einem dritten Schritt der Ansaugschlauch aus dem alten Aromabehälter herausgezogen wird, dass in einem vierten Schritt der herausgezogene Ansaugschlauch in einen neuen Aromabehälter eingeführt wird, dass in einem fünften Schritt der neue Aromabehälter mit dem einsteckenden Ansaugschlauch in das Aromamodul eingesetzt wird, und dass in einem sechsten Schritt der Ansaugschlauch mit dem pumpenseitigen Ende angeschlossen wird.

Gemäss einer Ausgestaltung des erfindungsgemässen Verfahrens wird zwischen dem dritten und vierten Schritt der Ansaugschlauch gespült.

Gemäss einer Ausgestaltung des erfindungsgemässen Verfahrens ist der Ansaugschlauch mit der zugehörigen Pumpe durch eine hydraulische Steckverbindung lösbar verbunden, wobei im ersten Schritt die Steckverbindung gelöst wird, und wobei im sechsten Schritt der Ansaugschlauch wieder in die Steckverbindung eingesteckt wird.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer perspektivischen Seitenansicht ein geöffnetes Aromamodul mit vier eingesetzten und angeschlossenen Aromabehältern gemäss einem Ausführungsbeispiel der Erfindung;
- Fig. 2: in der Draufsicht von oben bei abgenommener Abdeckung die Anordnung der Pumpen, der ein- und ausgangsseitigen Schläuche und der kapazitiven Sensoren zur Überwachung des Füllstandes der Aromabehälter im Aromamodul nach Fig. 1;
- Fig. 3: einen Längsschnitt durch eine Steckverbindung für den hydraulischen Anschluss der in die Aromabehälter eintauchenden Ansaugschläuche an das übrige Schlauchsystem im Aromamodul gemäss Fig. 1;
- Fig. 4: eine Ausgestaltung des in der Steckverbindung nach Fig. 3 verwendeten Winkelsteckers, bei der Elemente zur Drehverriegelung vorgesehen sind; und
- Fig. 5: in der Ansicht von vorne eine schematische Darstellung eines Kaffeeautomaten mit einem seitlich angesetzten bzw. angebauten Aromamodul der in Fig. 1 gezeigten Art.

### WEGE ZUR AUSFÜHRUNG DER ERFINDUNG

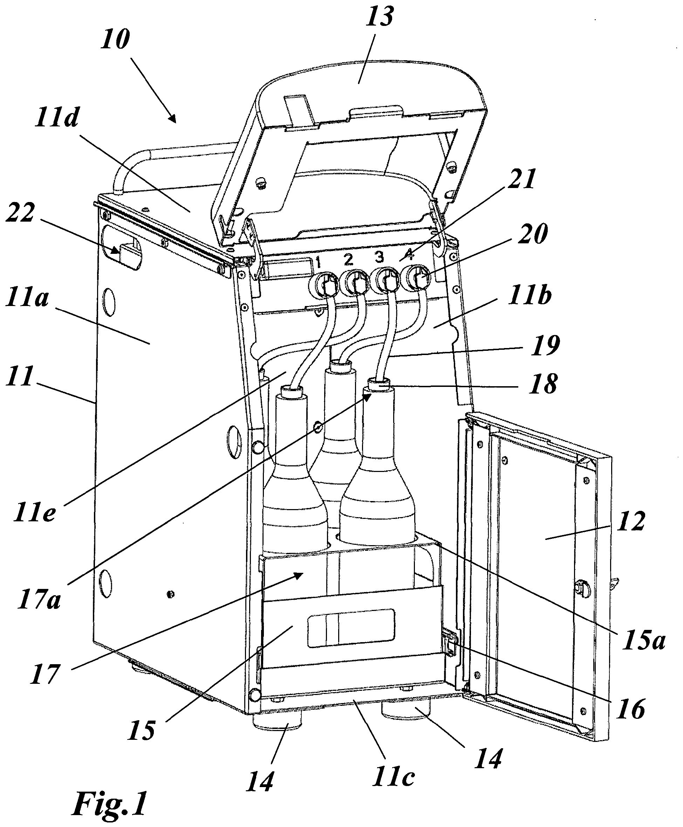

In Fig. 1 ist in einer perspektivischen Seitenansicht ein geöffnetes Aromamodul mit vier eingesetzten und angeschlossenen Aromabehältern gemäss einem Ausführungsbeispiel der Erfindung dargestellt. Das Aromamodul 10 der Fig. 1 ist in einem im Wesentlichen rechteckigen Gehäuse 11 untergebracht, dass nur auf der Frontseite im oberen Bereich leicht angeschrägt ausgebildet ist. Das Gehäuse 11 umschliesst einen Innenraum, der zur Aufnahme eines oder mehrerer Aromabehälter 17 vorgesehene ist. Die Aromabehälter 17 sind im Ausführungsbeispiel der Fig. 1 ihrer Form nach wie Flaschen ausgebildet, mit einem bauchigen Unterteil, der nach oben zu in einen schlanken Hals mit einer am Ende des Halses angeordneten Zugangsöffnung 17a übergeht. Sie können aber auch als Kartons, Kissen oder dgl. ausgebildet sein.

Das Gehäuse 11 ist nach unten durch einen Boden 11c, nach oben durch eine Abdeckung 11d, zu den Seiten hin durch Seitenwände 11a und 11b und nach hinten durch eine Rückwand 11e abgeschlossen. Boden, Abdeckung und Wände können als separate Blechplatten ausgebildet sein, die an einem entsprechenden Gehäuserahmen befestigt sind. Unter dem Boden 11c sind vier Füsse 14 verteilt angeordnet, die dem Modul 10 einen sicheren Stand verleihen.

Von vorne ist der Innenraum des Moduls 10, der für die Aufnahme der Aromabehälter 17 zuständig ist, durch eine seitlich angeschlagene, verriegel- und verschliessbare Tür 12 zugänglich. Ist die Tür 12 - wie in Fig. 1 gezeigt - geöffnet, kann eine im Innenraum mittels seitlicher Schienen 16 ausziehbar angeordnete Schublade (Wagen) 15, in den die Aromabehälter 17 hineingestellt werden, horizontal herausgezogen werden, um Aromabehälter 17 einzustellen oder auszutauschen. Zur Fixierung der Aromabehälter 17 an bestimmten Plätzen innerhalb der Schublade 15 kann in der Schublade 15 ein Einsatz 15a vorgesehen sein, der entsprechende Öffnungen für die Flaschen aufweist. Die Tür 12 schliesst nur den unteren Bereich des Gehäuses 11 bis zum Beginn der Abschrägung. Der abgeschrägte Bereich wird durch mittels spezieller Scharniere eine nach oben aufklappbare Klappe 13 geschlossen.

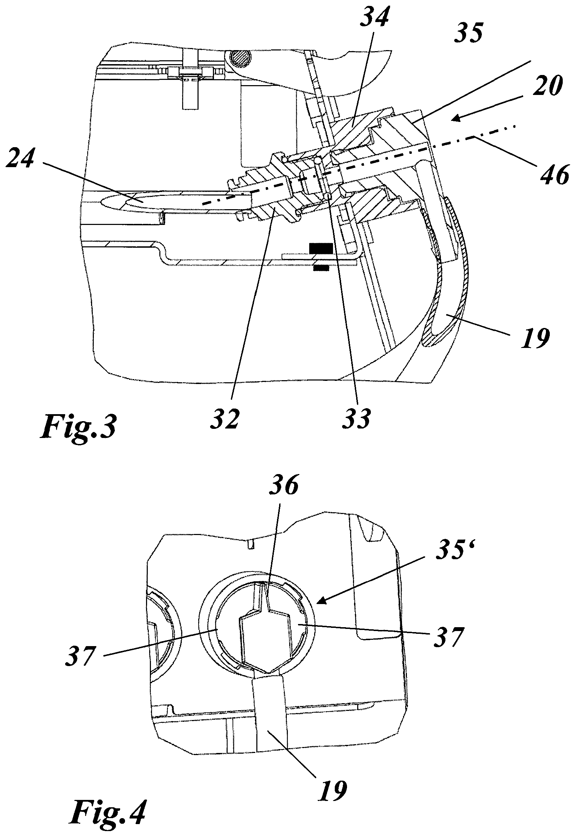

Im oberen Teil des durch die Klappe 13 schliessbaren abgeschrägten Bereichs ist an der Gehäusefront eine sich quer über die gesamte Breite erstreckende Montageplatte 21 befestigt, die eine der Anzahl der Aromabehälter 17 entsprechende Anzahl von nebeneinander angeordneten hydraulischen Steckverbindungen 20 trägt. Die Steckverbindungen 20, von denen eine im Längsschnitt in Fig. 3 wiedergegeben ist, gehen durch die Montageplatte 21 hindurch. Sie umfassen einen mit der Montageplatte 21 verschraubten buchsenartigen Adapter 34, in den von aussen ein am freien Ende eines Ansaugschlauches 19 angebrachter Winkelstecker 35 (bzw. 35' in Fig. 4) lösbar eingesteckt werden kann. Das Ein- bzw. Ausstecken der Winkelstecker 35 kann ungehindert vorgenommen werden, wenn zuvor die Klappe 13 geöffnet worden ist.

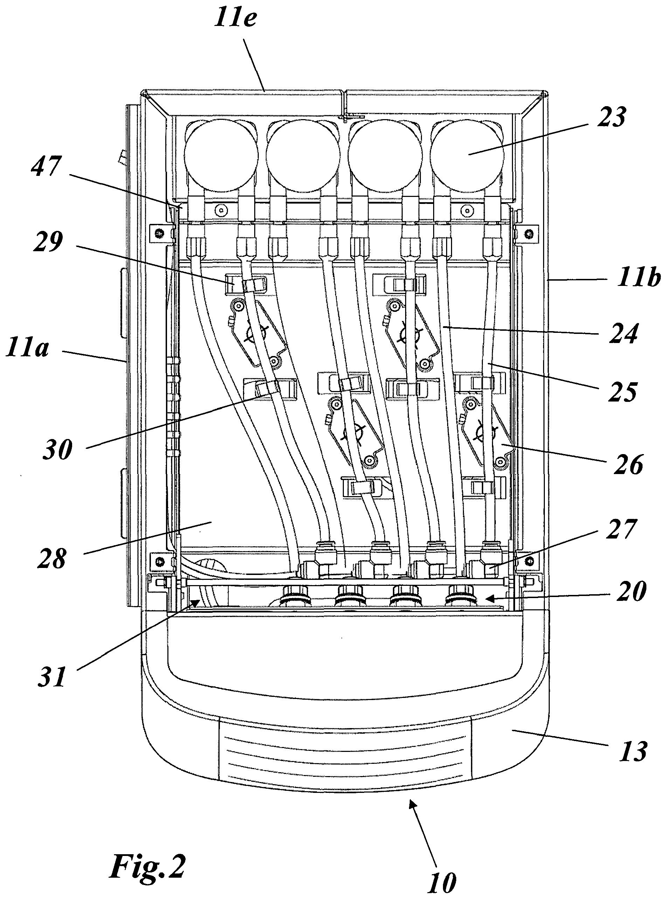

Auf der Rückseite der Montageplatte 21 ist mit den Adaptern 34 der Steckverbindungen 20 jeweils mittels eines eingeschraubten und durch eine Dichtung 33 abgedichteten, auftrennbaren Schlauchanschlusses 32 ein Verbindungsschlauch 24 angeschlossen (Fig. 3), der zum Eingang einer zugehörigen Pumpe 23 führt, die in einem Raum hinter der Montageplatte 21 an die Rückwand 11e angrenzend angeordnet ist (siehe Fig. 2). Der Schlauchanschluss 32 kann beispielsweise eine gerade Steck-Verschraubung aus Kunststoff sein (die Schläuche 19 und 24 in Fig. 3 sind zeichnungsbedingt nicht exakt in den Winkelstecker 35 bzw. den Schlauchanschluss 32 eingepasst).

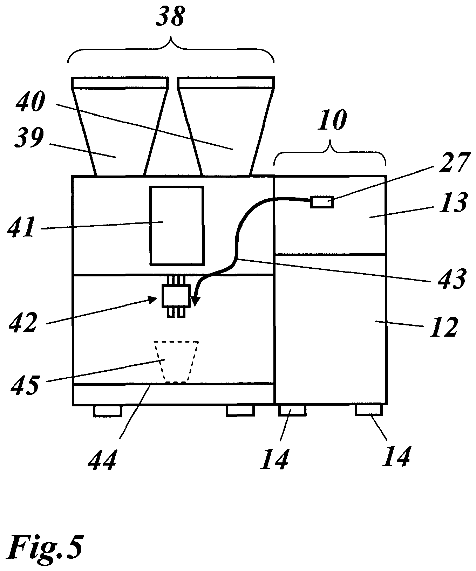

Somit ist jedem der Aromabehälter 17 eine motorisch angetriebene, steuerbare Pumpe 23 zur Förderung eines Aromastoffes/Sirups (Getränkezusatzes) zugeordnet, die eingangsseitig über einen Verbindungsschlauch 24, die Steckverbindung 20 und einen Ansaugschlauch 19 mit dem zugehörigen Aromabehälter 17 hydraulisch verbindbar (Fig. 1, 2). Ausgangsseitig ist an die Pumpe 23, die insbesondere als Schlauchquetschpumpe ausgebildet ist, jeweils ein weiterer Verbindungsschlauch 25 angeschlossen, der zu einem 6/4 Leitungswinkel 27 führt, der unmittelbar hinter der Montageplatte 21 angeordnet ist. Von den Leitungswinkeln 27 führen dann (nicht dargestellte) Auslassschläuche bzw. Leitungen durch einen Durchbruch 22 in der einen Seitenwand 11a zum unmittelbar daneben stehenden Kaffeeautomaten 38 (Fig. 5), wo sie direkt am dortigen Auslauf 42 enden, wie dies beispielsweise in Fig. 22 oder 31 der eingangs genannten Druckschrift US 8,161,865 B2 gezeigt und erläutert ist. Diese Verbindung zwischen Auslauf 42 und dem Leitungswinkel 27 des Aromamoduls ist in Fig. 5 exemplarisch als Aromaverbindung 43 eingezeichnet.

Der Raum, in dem die Pumpen 23, die Verbindungsschläuche 24 und 25 und die Leitungswinkel 27 untergebracht sind, ist durch einen Zwischenboden 28 vom darunter liegenden Raum für die Aromabehälter 17 abgetrennt. Der Zwischenboden 28 trägt vier kapazitive Sensoren 26, die zueinander versetzt jeweils unter einem der ausgangsseitigen Verbindungsschläuche 25 angeordnet sind und detektieren, ob der Schlauch mit Aromastoff/Sirup gefüllt ist oder nicht. Um einen engen körperlichen Kontakt zwischen Sensor 26 und Schlauch 25 zu gewährleisten, sind die Verbindungsschläuche 25 jeweils vor und hinter dem zugehörigen kapazitiven Sensor 26 mittels Schlauchklammern 29 und 30 am Zwischenboden 28 fixiert. Der Durchbruch 22 in der Seitenwand 11a ist soweit oben angeordnet, dass ein ungehinderter Zugang zum Raum oberhalb des Zwischenbodens 28 gewährleistet ist. Wie bereits erwähnt werden durch den Durchbruch 22 die am Auslauf 42 endenden Auslassschläuche geführt. Ebenenfalls durch den Durchbruch 22 hindurchgeführt werden elektrischer Kabel von der zentralen Steuerung des Kaffeeautomaten für die Signalübertragung von den Sensoren 26 und die Ansteuerung der Pumpen 23.

Wenn das Aromamodul 10 - wie in Fig. 5 dargestellt - beispielsweise an einen entsprechenden Kaffeeautomaten 38 angebaut wird, wird dessen Seitenwand durch die Seitenwand 11a des Aromamoduls ersetzt. Wie bereits erwähnt, werden die Auslassschläuche und elektrischen Leitungen zwischen Kaffeeautomat 38 und Aromamodul 10 durch den Durchbruch 22 in der Seitenwand geführt. Der Kaffeeautomat 38, der beispielsweise zwei Mühlen und zugehörige Bohnentrichter 39, 40 hat, bereitet, gesteuert über ein Anzeige/Bedien-Panel 41, ein Kaffeegetränk, das über den Auslauf 42 in einen darunter auf einer Stellfläche 44 stehenden Becher 45 ausgegeben wird. Wird über das Anzeige/Bedien-Panel 41 ein aromatisiertes Kaffeegetränk ausgewählt, wird durch die Steuerung des Kaffeeautomaten 38 die entsprechende Pumpe 23im Aromamodul 10 angesteuert, die eine vorbestimmte Menge Aromastoff über das Schlauchsystem zum Auslauf 42 befördert, wo sie in den Becher 45 ausgegeben wird.

Mit dem beschriebenen Funktionsprinzip und Aufbau ist es dem Anwender möglich, den Aromabehälter (die Flasche) 17 samt Ansaugschlauch 19 herauszunehmen und zu reinigen. Der Ansaugschlauch 19, ein flexibler Silikonschlauch, ist in den Aromabehälter 17 eingeführt. Ein Behältereinsatz 18, der dem Flaschenhals angepasst ist, wird in diesen eingeführt und hält den Ansaugschlauch 19 in der richtigen Länge im Behälter. Die unter den ausgangsseitigen Verbindungsschläuchen (Teflonschläuchen) 25 angeordneten kapazitiven Sensoren 26 detektieren, ob die Schläuche gefüllt sind oder nicht, bzw. ob die Aromabehälter bzw. -flaschen 17 leer sind.

Wird von einem Sensor eine Entleerung eines Aromabehälters 17 signalisiert, kann dieser Aromabehälter auf einfache und saubere Weise wie folgt ausgetauscht werden: Zunächst werden die Tür 12 und die Klappe 13 des Aromamoduls 10 geöffnet, wie dies in Fig. 1 dargestellt ist. Dann wird die Schublade 15 mit den Aromabehältern 17 nach vorne herausgezogen. Vorher, gleichzeitig oder auch danach kann der zugehörige Ansaugschlauch 19 am Winkelstecker 35 aus der Steckverbindung 20 ausgesteckt werden, ohne dass unerwünschte Aromastoffreste nach unten auslaufen und abtropfen. In einem zweiten Schritt wird der leere Aromabehälter 17 mit seinem einsteckenden Ansaugschlauch 19 aus der Schublade 15 herausgenommen. In einem dritten Schritt kann nun an einem geeigneten Ort, z.B. über einem Ausgussbecken, der (tropfende) Ansaugschlauch 19 aus dem leeren Aromabehälter 17 samt Behältereinsatz 18 herausgezogen werden. Ansaugschlauch 19 und Behältereinsatz 18 können nun separat gespült bzw. gereinigt werden und sind dann für einen neuen Einsatz bereit. In einem weiteren Schritt wird nun der gesäuberte Ansaugschlauch 19 mit seinem Behältereinsatz 18 in einen neuen Aromabehälter 17 eingeführt. Der Aromabehälter 17 kann dann in die Schublade 15 eingesetzt und der Ansaugschlauch 19 mit dem Winkelstecker 35 durch Einstecken in die Steckverbindung 20 wieder an die entsprechende Pumpe 23 angeschlossen werden. Einschieben der Schublade 15 und Schliessen von Tür 12 und Klappe 13 Beenden des Austauschvorgang.

Der in Fig. 3 gezeigte Winkelstecker 35 ist in dieser Ausgestaltung im eingesteckten Zustand ungesichert. Es kann daher von Vorteil sein, am Winkelstecker zusätzlich gewisse Sicherungsmittel vorzusehen. Eine entsprechende Ausgestaltung ist in Fig. 4 als Winkelstecker 35' dargestellt. Der Winkelstecker 35' weist auf der Rückseite einen Knebelgriff 36 auf. Seitlich sind gegenüberliegend zwei Schultern 37 angeformt, die für einen Dreheingriff am Adapter 34 vorgesehen sind. Dies kann entweder nach Art eines Bajonettverschlusses geschehen oder indem die Schultern 37 am Adapter 34 in ein "Innengewinde" eingreifen.

Vorgängig wurde die Erfindung anhand eines Ausführungsbeispiels erläutert. Im Rahmen der Erfindung sind jedoch weitere Ausgestaltungen denkbar.

Da ohnehin eine elektrische bzw. signaltechnische Verbindung zwischen Aromamodul 10 und Kaffeeautomat 38 besteht, kann der Steuerung des Kaffeeautomaten 38 auch signalisiert und auf dem Anzeige/Bedien-Panel 41 angezeigt werden, welche "Aromaplätze" besetzt, d.h. welche Winkelstecker 35 eingesteckt sind. Dazu kann an der Steckverbindung 20 beispielsweise jeweils ein Schaltkontakt angeordnet sein, der durch das Einstecken des Winkelsteckers 35 betätigt wird und die Belegung des entsprechenden Aromaplatzes signalisiert. Es ist aber auch denkbar, das Einstellen eines Aromabehälters in die Schublade zu detektieren. Wird dazu beispielsweise eine optische Schranke verwendet, kann diese auch zur Füllstandskontrolle herangezogen werden, so dass die Steuerung ein Signal erhält, wenn der Füllstand unter ein gewisses Mindestmass abgefallen ist.

Weiterhin können in das Schlauch- bzw. Leitungssystem Mittel eingebaut sein, die ein Zurückfliessen des Aromastoffes in Richtung auf den Aromabehälter 17 verhindern. Solche Mittel können beispielsweise ein Rückschlagventil umfassen, das in die Steckverbindung 20 integriert ist und den Aromastoff nur in Auslassrichtung durchlässt. Es ist aber auch denkbar, in einen der Schläuche eine mechanische Kopplung einzubauen, welche die Funktion eines Absperrventils übernimmt.

Grundsätzlich kann der geförderte Volumenstrom über die Fördercharakteristik der Schlauchquetschpumpe 23 bestimmt und zur Steuerung der Aromatisierung verwendet werden. Es ist jedoch auch möglich, in einen der Schläuche, insbesondere in die vorher erwähnte mechanische Kopplung, einen Durchflussmesser zu integrieren, um den Volumenstrom des Aromastoffes unabhängig bestimmen zu können.

Des Weiteren ist es denkbar, die Aromabehälter, Steckverbindungen und Behältereinsätze zu kodieren, so dass nur bestimmte Aromaarten an bestimmte Steckverbindungen angeschlossen werden können. Dadurch kann vermieden werden, dass beim Austausch von Aromabehältern sich unterschiedliche Aromaarten im Leitungssystem vermischen.

Selbstverständlich können die Steckverbindungen 20 bzw. der Adapter 34 dazu verwendet werden, um von dort aus das zugehörige Schlauchsystem einschliesslich Pumpe 23 zu reinigen, wenn ein Behälter oder eine Vorrichtung mit Reinigungsflüssigkeit dort angeschlossen bzw. eingesteckt wird. Insbesondere könnte anstelle eines Aromabehälters 17 ein entsprechender Behälter mit Reinigungsmitteln einsetzbar sein, der über einen Ansaugschlauch 19 mit Winkelstecker 35 an das zu reinigende Schlauch- bzw. Leitungssystem angeschlossen wird.

Schliesslich könnte in den Adapter 34 eine Heizelement integriert sein, mit dem entweder der geförderte Aromastoff/Sirup oder ein Geschmackszusatz wie z.B. Schnaps vorgewärmt wird, oder im Fall der Reinigung die Reinigungsflüssigkeit angewärmt wird, um die Reinigungswirkung zu verstärken.

In den bisherigen Erläuterungen wurde das Aromamodul im Zusammenhang mit der Aromatisierung von Kaffeegetränken erläutert. Selbstverständlich kann das Aromamodul der Erfindung auch zur Zubereitung von Kaltmilchgetränken eingesetzt werden. Dabei wird kalte Milch zusammen mit kaltem Milchschaum und einen aromatisierenden Sirup automatisch zu einem Milchgetränk zusammengeführt, so dass sich auf Knopfdruck - z.B. an der Kaffeemaschine - eine Art Milchshake ergibt.

Schliesslich ist es auch denkbar, das Aromamodul 10 statt direkt an einer Kaffeemaschine an einem für die Herstellung von schokoladenhaltigen Getränken vorgesehenen Schoko-Modul zu befestigen. In diesem Fall würde das Aromamodul einfach durch mehrere Schrauben an das Schoko-Modul angeschraubt.

### Bezugszeichenliste

- 10: Aromamodul
- 11: Gehäuse
- 11a,b: Seitenwand
- 11c: Boden
- 11d: Abdeckung
- 11e: Rückwand
- 12: Tür
- 13: Klappe
- 14: Fuss
- 15: Schublade
- 15a: Einsatz
- 16: Schiene
- 17: Aromabehälter (Aromaflasche)
- 17a: Öffnung
- 18: Behältereinsatz
- 19: Ansaugschlauch
- 20: Steckverbindung
- 21: Montageplatte
- 22: Durchbruch
- 23: Schlauchquetschpumpe
- 24: Verbindungsschlauch (eingangsseitig)
- 25: Verbindungsschlauch (ausgangsseitig)
- 26: kapazitiver Sensor
- 27: Leitungswinkel
- 28: Zwischenboden
- 29,30: Schlauchklammer
- 31: Durchbruch
- 32: Schlauchanschluss
- 33: Dichtung
- 34: Adapter
- 35,35': Winkelstecker
- 36: Knebelgriff
- 37: Schulter
- 38: Kaffeeautomat
- 39,40: Bohnentrichter
- 41: Anzeige/Bedien-Panel
- 42: Auslauf
- 43: Aromaleitung
- 44: Stellfläche
- 45: Becher
- 46: Verbinderachse
- 47: Trägerplatte

## Patentansprüche

1. Aromamodul (10) zur gesteuerten Ausgabe von aromatisierenden Getränkezusätzen zur Aromatisierung von Kaffeegetränken, umfassend einen von einem Gehäuse (11) umgebenen Raum zur Aufnahme eines oder mehrerer Aromabehälter (17), wobei jeder der Aromabehälter (17) über einen Schlauch (19) lösbar an das Aromamodul (10) anschliessbar ist, **dadurch gekennzeichnet, dass** am Aromamodul (10) eine hydraulische Steckverbindung (20) vorgesehen ist, die ein Auswechseln mit dem zugehörigen Aromabehälter (17) zusammen mit einsteckendem Schlauch (19) ermöglicht.

2. Aromamodul nach Anspruch 1, **dadurch gekennzeichnet, dass** jedem der Aromabehälter (17) eine motorisch angetriebene, steuerbare Pumpe (23) zur Förderung des Getränkezusatzes zugeordnet ist, die eingangsseitig über ein Schlauchsystem (18, 19, 20, 24) mit dem zugehörigen Aromabehälter (17) hydraulisch verbindbar ist und ausgangsseitig mit einem Auslauf (42) zur Ausgabe vorbestimmter Mengen des jeweiligen Getränkezusatzes verbindbar ist, dass die Aromabehälter (17) jeweils eine oben liegende Öffnung (17a) aufweisen, durch welche der Inhalt des Aromabehälters (17) entnehmbar ist, dass das Schlauchsystem (18, 19, 20, 24) einen Ansaugschlauch (19) umfasst, welcher durch die Öffnung (17a) in den Aromabehälter (17) so weit einführbar ist, dass er den Inhalt des Aromabehälters (17) bis auf geringe Reste ansaugen kann, und dass der Ansaugschlauch (19) mit dem pumpenseitigen Ende lösbar mit der zugehörigen Pumpe (23) verbunden ist.

3. Aromamodul nach Anspruch 2, **dadurch gekennzeichnet, dass** der Ansaugschlauch (19) jeweils durch einen Behältereinsatz (18) geführt ist, der in die Öffnung (17a) im Aromabehälter (17) einsetzbar ist.

4. Aromamodul nach Anspruch 3, **dadurch gekennzeichnet, dass** der Behältereinsatz (18) die Öffnung (17a) im Aromabehälter (17) verschliesst.

5. Aromamodul nach Anspruch 1, **dadurch gekennzeichnet, dass** die hydraulischen Steckverbindungen (20) oberhalb des Raums zur Aufnahme der Aromabehälter (17) angeordnet sind.

6. Aromamodul nach Anspruch 1, **dadurch gekennzeichnet, dass** die hydraulischen Steckverbindungen (20) nebeneinander auf einer an der Frontseite des Gehäuses (11) befestigten gemeinsamen Montageplatte (21), vorzugsweise durch die Montageplatte (21) hindurchgehend, fest eingebaut sind, und dass die Pumpen (23) im rückwärtigen Teil des Gehäuses (11), vorzugsweise nebeneinander und unterhalb der Steckverbindungen (20), angeordnet sind.

7. Aromamodul nach Anspruch 6, **dadurch gekennzeichnet, dass** die hydraulischen Steckverbindungen (20) so ausgelegt sind, dass die Ansaugschläuche (19) jeweils mit einem am pumpenseitigen Ende angebrachten Stecker (35, 35') von vorn in die hydraulischen Steckverbindungen (20) einsteckbar sind, und dass die hydraulischen Steckverbindungen (20) jeweils über einen ersten Verbindungsschlauch (24) mit dem Eingang der zugehörigen Pumpe (23) verbunden sind.

8. Aromamodul nach Anspruch 7, **dadurch gekennzeichnet, dass** die hydraulischen Steckverbindungen (20) auf der Montageplatte (21) mit ihrer Verbinderachse (46) nach aussen hin schräg ansteigend montiert sind, und dass die jeweils am pumpenseitigen Ende der Ansaugschläuche (19) angebrachten Stecker als Winkelstecker (35, 35') ausgebildet sind.

9. Aromamodul nach Anspruch 8, **dadurch gekennzeichnet, dass** die Winkelstecker (35') lösbare Verriegelungsmittel (36, 37), insbesondere in Form einer Drehverriegelung, aufweisen.

10. Aromamodul nach Anspruch 6, **dadurch gekennzeichnet, dass** zur Verbindung mit dem Auslauf (42) von den Pumpen (23) ausgangsseitig jeweils ein zweiter Verbindungsschlauch (25) wegführt, und dass jedem der zweiten Verbindungsschläuche (25) Mittel (26) zur Überwachung des Füllzustandes zugeordnet sind.

11. Aromamodul nach Anspruch 9, **dadurch gekennzeichnet, dass** die Mittel zur Überwachung des Füllzustandes als an den Schläuchen (25) angeordnete kapazitive Sensoren (26) ausgebildet sind.

12. Aromamodul nach Anspruch 6, **dadurch gekennzeichnet, dass** der Raum für die Aufnahme der Aromabehälter (17) durch eine, vorzugsweise seitlich angeschlagene, Tür (12) zugänglich ist, und dass die hydraulischen Steckverbindungen (20) durch eine, vorzugsweise nach oben aufklappbare, Klappe (13) zugänglich sind.

13. Aromamodul nach Anspruch 1, **dadurch gekennzeichnet, dass** im Gehäuse (11) eine, vorzugsweise nach vorne, herausziehbare Schublade (15) angeordnet ist, welche zur Aufnahme der Aromabehälter (17) vorgesehen ist.

14. Aromamodul nach Anspruch 1, **dadurch gekennzeichnet, dass** das Aromamodul (10) zum seitlichen Anbau an einen Kaffeeautomaten (38) vorgesehen ist, und dass in der dem Kaffeeautomaten (38) zugewandten Seitenwand (11a) ein Durchbruch (22) vorhanden ist, durch welchen elektrische Leitungen zwischen Kaffeeautomaten (38) und Aromamodul (10) und Aromaleitungen (43) vom Aromamodul (10) zum Kaffeeautomaten (38) verlaufen.

15. Verfahren zum Betrieb eines Aromamoduls nach Anspruch 2, **dadurch gekennzeichnet, dass** beim Auswechseln eines Aromabehälters (17) in einem ersten Schritt der zugehörige Ansaugschlauch (19) am pumpenseitigen Ende von der Verbindung mit der Pumpe (23) gelöst wird, dass in einem zweiten Schritt der alte Aromabehälter (17) mit seinem einsteckenden Ansaugschlauch (19) aus dem Aromamodul (10) entnommen wird, dass in einem dritten Schritt der Ansaugschlauch (19) aus dem alten Aromabehälter (17) herausgezogen wird, dass in einem vierten Schritt der herausgezogene Ansaugschlauch (19) in einen neuen Aromabehälter (17) eingeführt wird, dass in einem fünften Schritt der neue Aromabehälter (17) mit dem einsteckenden Ansaugschlauch (19) in das Aromamodul (10) eingesetzt wird, und dass in einem sechsten Schritt der Ansaugschlauch (19) mit dem pumpenseitigen Ende angeschlossen wird.

16. Verfahren nach Anspruch 15, **dadurch gekennzeichnet, dass** zwischen dem dritten und vierten Schritt der Ansaugschlauch (19) gespült wird.

17. Verfahren nach Anspruch 15, **dadurch gekennzeichnet, dass** der Ansaugschlauch (19) mit der zugehörigen Pumpe (23) durch eine hydraulische Steckverbindung (20) lösbar verbunden ist, dass im ersten Schritt die Steckverbindung (20) gelöst wird, und dass im sechsten Schritt der Ansaugschlauch (19) wieder in die Steckverbindung (20) eingesteckt wird.

## Claims

1. A flavour module (10) for controlled dispensing of flavouring beverage additives for flavouring coffee beverages, comprising a chamber surrounded by a housing (11) for receiving one or more flavour containers (17), wherein each of the flavour containers (17) is connectable releasably to the flavour module (10) via a tube (19), **characterized in that** a hydraulic plug-in connection (20) is provided on the flavour module (10), said plug-in connection enables replacement of the associated flavour container (17) together with the inserting tube (19).

2. The flavour module according to claim 1, **characterized in that** each of the flavour containers (17) is assigned a motor-driven, controllable pump (23) for conveying the beverage additive, said pump being hydraulically connectable on the input side to the associated flavour container (17) via a tube system (18, 19, 20, 24) and being connectable on the output side to an outlet (42) for dispensing predetermined quantities of the respective beverage additive, **in that** the flavour containers (17) each have an opening (17a) located at the top through which the contents of the flavour container (17) is extractable, **in that** the tube system (18, 19, 20, 24) comprises a suction tube (19) which is introducible through the opening (17a) into the flavour container (17) to such an extent that said suction tube can suck up the contents of the flavour container (17) apart from small residues, and **in that** the suction tube (19) is connectable releasably at the pump-side end to the associated pump (23).

3. The flavour module according to claim 2, **characterized in that** the suction tube (19) is in each case guided through a container insert (18) which is insertable into the opening (17a) in the flavour container (17).

4. The flavour module according to claim 3, **characterized in that** the container insert (18) closes the opening (17a) in the flavour container (17).

5. The flavour module according to claim 1, **characterized in that** the hydraulic plug-in connections (20) are arranged above the chamber for receiving the flavour containers (17).

6. The flavour module according to claim 1, **characterized in that** the hydraulic plug-in connections (20) are fixedly installed next to one another on a common mounting plate (21) fastened to the front side of the housing (11), preferably passing through the mounting plate (21), and **in that** the pumps (23) are arranged in the rear part of the housing (11), preferably next to one another and below the plug-in connections (20).

7. The flavour module according to claim 6, **characterized in that** the hydraulic plug-in connections (20) are configured in such a manner that the suction tubes (19) can each be plugged with a plug (35, 35'), which is attached at the pump-side end, from the front into the hydraulic plug-in connections (20), and **in that** the hydraulic plug-in connections (20) are each connected via a first connecting tube (24) to the input of the associated pump (23).

8. The flavour module according to claim 7, **characterized in that** the hydraulic plug-in connections (20) are mounted on the mounting plate (21) with their connector axis (46) rising obliquely outwards, and **in that** the plugs attached in each case at the pump-side end of the suction tubes (19) are in the form of angle plugs (35, 35').

9. The flavour module according to claim 8, **characterized in that** the angle plugs (35') have releasable locking means (36, 37), in particular in the form of a rotary lock.

10. The flavour module according to claim 6, **characterized in that**, for the connection to the outlet (42), a second connecting tube (25) in each case leads away from the pumps (23) on the output side, and **in that** each of the second connecting tubes (25) is assigned means (26) for monitoring the filling level.

11. The flavour module according to claim 9, **characterized in that** the means for monitoring the filling level are configured as capacitive sensors (26) arranged at the tubes (25).

12. The flavour module according to claim 6, **characterized in that** the chamber for receiving the flavour containers (17) is accessible through a, preferably laterally fastened, door (12), and **in that** the hydraulic plug-in connections (20) are accessible through a flap (13), which can preferably be swung open upwards.

13. The flavour module according to claim 1, **characterized in that** a drawer (15) which can be pulled out, preferably forwards, is arranged in the housing (11) and is provided for receiving the flavour containers (17).

14. The flavour module according to claim 1, **characterized in that** the favour module (10) is provided for attaching laterally to a coffee machine (38), and **in that** there is an opening (22) in the side wall (11a) facing the coffee machine (38), through which electric lines between coffee machine (38) and flavour module (10) and flavour lines (43) run from the flavour module (10) to the coffee machine (38).

15. A method for operating a flavour module according to Claim 2, **characterized in that**, for the replacement of a flavour container (17), in a first step the associated suction tube (19) of the pump-side end is released from the connection to the pump (23), **in that**, in a second step, the old flavour container (17) is removed together with its inserting suction tube (19) from the flavour module (10), **in that**, in a third step, the suction tube (19) is pulled out of the old flavour container (17), **in that**, in a fourth step, the pulled-out suction tube (19) is introduced into a new flavour container (17), **in that**, in a fifth step, the new flavour container (17) with the inserting suction tube (19) is inserted into the flavour module (10), and **in that**, in a sixth step, the suction tube (19) is connected to the pump-side end.

16. The method according to claim 15, **characterized in that** the suction tube (19) is flushed between the third and fourth step.

17. The method according to claim 15, **characterized in that** the suction tube (19) is releasably connected to the associated pump (23) by a hydraulic plug-in connection (20), **in that**, in the first step, the plug-in connection (20) is released, and **in that**, in the sixth step, the suction tube (19) is inserted again into the plug-in connection (20).

## Revendications

1. Module d'arôme (10) pour distribuer de manière commandée des additifs aromatisants pour boissons pour aromatiser des boissons au café, comprenant un espace entouré par un boîtier (11) pour recevoir un ou plusieurs récipients d'arôme (17), chacun des récipients d'arôme (17) pouvant être raccordé de manière amovible au module d'arôme par le biais d'un tuyau (19), **caractérisé en ce qu'**un raccord enfichable hydraulique (20) est prévu au niveau du module d'arôme (10), lequel permet un remplacement avec le récipient d'arôme associé (17) conjointement avec le tuyau enfiché (19).

2. Module d'arôme selon la revendication 1, **caractérisé en ce qu'**une pompe commandable (23), entraînée par moteur, pour refouler l'additif pour boissons, est associée à chacun des récipients d'arôme (17), laquelle peut être raccordée hydrauliquement du côté de l'entrée par le biais d'un système de tuyaux (18, 19, 20, 24) au récipient d'arôme associé (17) et peut être raccordée du côté de la sortie à une sortie (42) pour distribuer des quantités prédéterminées de l'additif pour boissons respectif, **en ce que** les récipients d'arôme (17) présentent chacun une ouverture située en haut (17a) à travers laquelle le contenu du récipient d'arôme (17) peut être prélevé, **en ce que** le système de tuyaux (18, 19, 20, 24) comprend un tuyau d'aspiration (19) qui peut être introduit à travers l'ouverture (17a) dans le récipient d'arôme (17) suffisamment loin pour qu'il puisse aspirer le contenu du récipient d'arôme (17) presque complètement et **en ce que** le tuyau d'aspiration (19) est raccordé par l'extrémité côté pompe de manière amovible à la pompe associée (23).

3. Module d'arôme selon la revendication 2, **caractérisé en ce que** le tuyau d'aspiration (19) est à chaque fois guidé par un insert de récipient (18) qui peut être inséré dans l'ouverture (17a) dans le récipient d'arôme (17).

4. Module d'arôme selon la revendication 3, **caractérisé en ce que** l'insert de récipient (18) ferme l'ouverture (17a) dans le récipient d'arôme (17).

5. Module d'arôme selon la revendication 1, **caractérisé en ce que** les raccords enfichables hydrauliques (20) sont disposés au-dessus de l'espace prévu pour recevoir les récipients d'arôme (17).

6. Module d'arôme selon la revendication 1, **caractérisé en ce que** les raccords enfichables hydrauliques (20) sont montés fixement les uns à côté des autres sur une plaque de montage (21) commune fixée au côté avant du boîtier (11), de préférence à travers la plaque de montage (21), et **en ce que** les pompes (23) sont disposées dans la partie arrière du boîtier (11), de préférence les unes à côté des autres et en dessous des raccords enfichables (20).

7. Module d'arôme selon la revendication 6, **caractérisé en ce que** les raccords enfichables hydrauliques (20) sont conçus de telle sorte que les tuyaux d'aspiration (19) puissent être à chaque fois enfichés depuis l'avant dans les raccords enfichables (20) avec un connecteur enfichable (35, 35') monté à l'extrémité côté pompe, et **en ce que** les raccords enfichables hydrauliques (20) sont à chaque fois raccordés à l'entrée de la pompe associée (23) par le biais d'un premier tuyau de raccordement (24).

8. Module d'arôme selon la revendication 7, **caractérisé en ce que** les raccords enfichables hydrauliques (20) sont montés sur la plaque de montage (21) avec leur axe de raccordement (46) montant obliquement vers l'extérieur et **en ce que** les connecteurs enfichables montés à chaque fois au niveau de l'extrémité côté pompe des tuyaux d'aspiration (19) sont réalisés sous forme de connecteurs coudés (35, 35').

9. Module d'arôme selon la revendication 8, **caractérisé en ce que** les connecteurs coudés (35') présentent des moyens de verrouillage desserrables (36, 37), en particulier sous la forme d'un verrouillage rotatif.

10. Module d'arôme selon la revendication 6, **caractérisé en ce que** pour le raccordement à la sortie (42), à chaque fois un deuxième tuyau de raccordement (25) conduit hors des pompes (23) du côté de la sortie et **en ce que** des moyens (26) pour contrôler le niveau de remplissage sont associés à chacun des deuxièmes tuyaux de raccordement (25).

11. Module d'arôme selon la revendication 9, **caractérisé en ce que** les moyens pour contrôler le niveau de remplissage sont réalisés sous forme de capteurs capacitifs (26) disposés au niveau des tuyaux (25).

12. Module d'arôme selon la revendication 6, **caractérisé en ce que** l'espace pour recevoir les récipients d'arôme (17) est accessible par une porte (12), de préférence accrochée latéralement, et **en ce que** les raccords enfichables hydrauliques (20) sont accessibles par un clapet (13), de préférence s'ouvrant par pivotement vers le haut.

13. Module d'arôme selon la revendication 1, **caractérisé en ce qu'**un tiroir (15) pouvant être de préférence tiré vers l'avant est disposé dans le boîtier (11), lequel est prévu pour recevoir les récipients d'arôme (17).

14. Module d'arôme selon la revendication 1, **caractérisé en ce que** le module d'arôme (10) est prévu pour être monté latéralement sur un distributeur automatique de café (38) et **en ce qu'**un orifice (22) est prévu dans la paroi latérale (11 a) tournée vers le distributeur automatique de café (38), à travers lequel des conduites électriques s'étendent entre le distributeur automatique de café (38) et le module d'arôme (10) et des conduites d'arôme (43) s'étendent du module d'arôme (10) au distributeur automatique de café (38).

15. Procédé pour faire fonctionner un module d'arôme selon la revendication 2, **caractérisé en ce que** lors du remplacement des récipients d'arôme (17), dans une première étape, le tuyau d'aspiration associé (19) au niveau de l'extrémité côté pompe est détaché du raccord à la pompe (23), **en ce que** dans une deuxième étape, le récipient d'arôme usagé (17) avec son tuyau d'aspiration enfiché (19) est enlevé du module d'arôme (10), **en ce que** dans une troisième étape, le tuyau d'aspiration (19) est retiré du récipient d'arôme usagé (17), **en ce que** dans une quatrième étape, le tuyau d'aspiration retiré (19) est introduit dans un nouveau récipient d'arôme (17), **en ce que** dans une cinquième étape, le nouveau récipient d'arôme (17) avec le tuyau d'aspiration enfiché (19) est inséré dans le module d'arôme (10) et **en ce que** dans une sixième étape, le tuyau d'aspiration (19) est raccordé à l'extrémité côté pompe.

16. Procédé selon la revendication 15, **caractérisé en ce qu'**entre la troisième et la quatrième étape, le tuyau d'aspiration (19) est rincé.

17. Procédé selon la revendication 15, **caractérisé en ce que** le tuyau d'aspiration (19) est raccordé de manière amovible à la pompe associée (23) par un raccord enfichable hydraulique (20), **en ce que** dans la première étape, le raccord enfichable (20) est desserré, et **en ce que** dans la sixième étape, le tuyau d'aspiration (19) est à nouveau enfiché dans le raccord enfichable (20).
